Europäisches Patentamt

European Patent Office

Office européen des brevets

(19)

(11) Numéro de publication : **0 487 389 A1**

# (12) DEMANDE DE BREVET EUROPEEN

(21) Numéro de dépôt : 91403085.3

(51) Int. Cl.⁵ : **G02F 1/136**

(22) Date de dépôt : **15.11.91**

(30) Priorité : **23.11.90 FR 9014624**

(43) Date de publication de la demande :
**27.05.92 Bulletin 92/22**

(84) Etats contractants désignés :
**DE FR GB NL**

(71) Demandeur : **THOMSON-LCD**
**51, Esplanade du Géneral de Gaulle**
**F-92800 Puteaux (FR)**

(72) Inventeur : **Mourey, Bruno**
**THOMSON-CSF, SCPI, Cédex 67**
**F-92045 Paris la Défense (FR)**
Inventeur : **Hepp, Bernard**
**THOMSON-CSF, SCPI, Cédex 67**
**F-92045 Paris la Défense (FR)**

(74) Mandataire : **Ruellan-Lemonnier, Brigitte et al**
**THOMSON-CSF SCPI**
**F-92045 PARIS LA DEFENSE CEDEX 67 (FR)**

(54) **Ecran plat à matrice active.**

(57) La présente invention concerne les écrans plats à matrice active dans lequel les points image (10) sont disposés à l'intersection de deux réseaux de conducteurs appelés lignes (L1 à LN) et colonnes (C1 à CM). Conformément à l'invention, chaque point image est constitué par deux condensateurs (CON1, CON'1) en série formés par des éléments électro-optiques, l'ensemble étant monté entre deux transistors de commande (T1, T'1), les deux transistors étant connectés respectivement à une ligne commune (L1) et à deux colonnes différentes (C1, C'1).

Application notamment aux écrans à cristaux liquides.

FIG. 2

EP 0 487 389 A1

La présente invention concerne un écran plat à matrice active, plus particulièrement un écran plat à matrice active dans lequel chaque point image défini à l'intersection de deux réseaux de conducteurs orthogonaux appelés lignes et colonnes comporte un transistor de commande noté en série avec un condensateur, réalisé par un élément électro-optique tel qu'un cristal liquide.

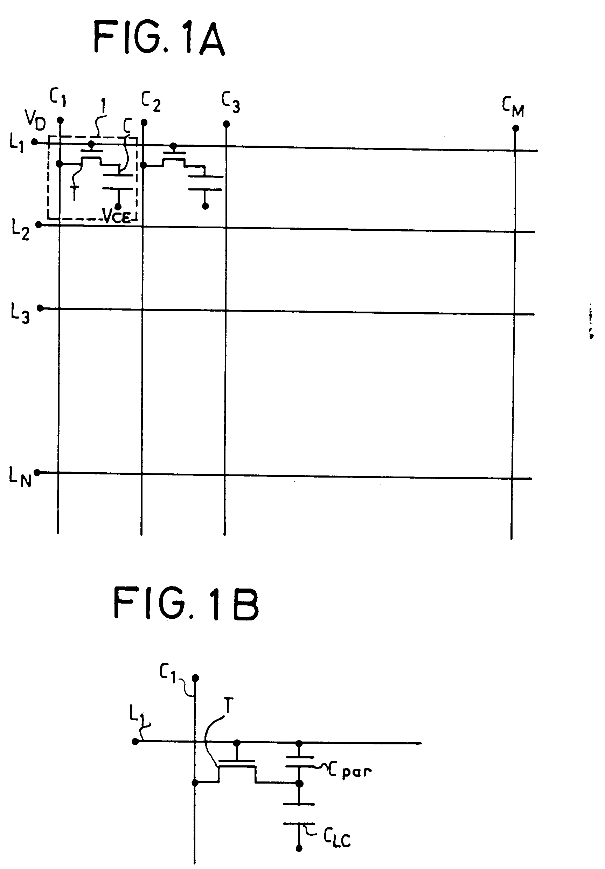

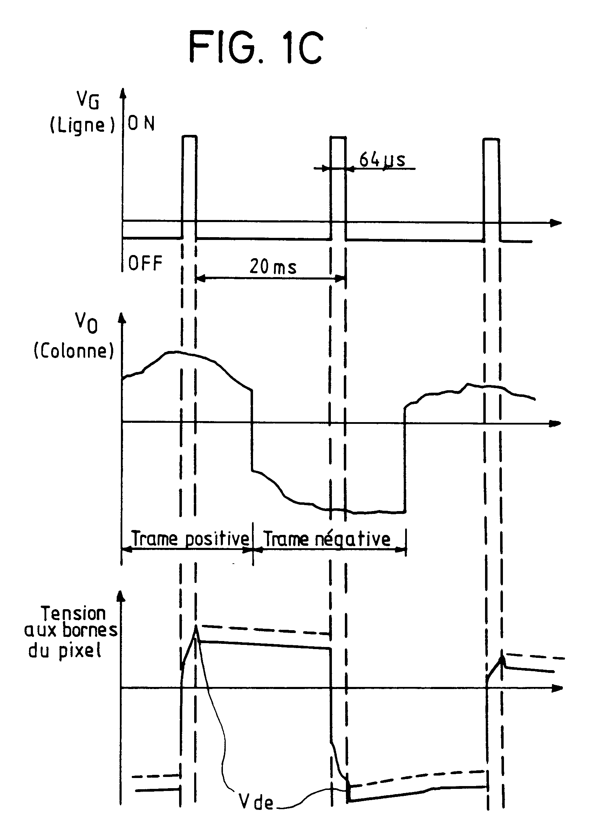

Comme représenté schématiquement sur la figure 1, un écran plat à matrice active est constitué par deux réseaux orthogonaux de lignes L1, L2, .., LN et de colonnes C1, C2, C3, ..., CM. A L'intersection de chaque ligne et de chaque colonne est connecté un point image 1 formé d'un élément actif de commutation, à savoir un transistor T, relié en série à un condensateur C. Le condensateur C est constitué par un élément électro-optique tel qu'un cristal liquide inséré entre deux électrodes. En fait, un cristal liquide est équivalent à un condensateur en parallèle avec une résistance de fuite, l'ensemble donnant un effet mémoire. Toutefois, cette résistance n'a pas été représentée car elle n'a pas de rôle dans le cadre de la présente invention.

Dans le cas des écrans plats à matrice active, l'ensemble des éléments constitué par les colonnes C1 à CM, les lignes L1 à LN, les transistors de commande T et une les armatures des condensateurs C est realisé sur un même substrat, tandis que l'autre armature des condensateurs C est constituée par une contre-électrode déposée sur un autre substrat, les deux substrats enfermant le cristal liquide. En fonctionnement, cette contre-électrode est alimentée par une tension continue telle que VCE dans le mode de réalisation représenté. D'autre part, la grille du transistor T est connectée aux lignes L1, tandis que l'électrode du transistor T qui n'est pas reliée au condensateur C est connectée à une colonne telle que C1. Lorsque l'on applique une tension supérieure à la tension de seuil du transistor sur la ligne L1, le transistor T devient passant et le condensateur C se charge en fonction de la tension de données VD ou de la tension de données inverse -VD appliquée sur la colonne C1. Toutefois, à cause des capacités parasites $C_{par}$ existant entre la ligne et le point-image ou pixel, comme représenté sur la figure 1B donnant un schéma élémentaire d'un point-image, lorsque l'on ferme le transistor T on obtient un couplage ligne-point image créant un décalage de tension négatif sur le pixel. De ce fait, la tension sur le cristal liquide n'est pas correcte.

Le principe général d'un couplage capacitif est le suivant si le conducteur auquel la capacité $C_{par}$ couple le point-image subit une variation de potentiel V, une fraction Up est induite sur le pixel par division capacitive

$$Up = \frac{Cpar}{C_{par} + C_{LC}}$$

Cette capacité parasite est due aux capacités du transistor élémentaire, capacité de canal plus capacité géométrique de recouvrement. Elles induisent. donc un décalage de tension continue en fin de période d'adressage, c'est-à-dire à la transition "ON-OFF" du transistor. La figure 1C donne une représentation des tensions électriques sur les différents conducteurs de l'élément d'images. La courbe en trait plein représente la valeur réelle de la tension aux bornes du cristal liquide tandis que la courbe en tirets représente la valeur théorique sans couplage capacitif de la tension aux bornes du cristal liquide, $V_{de}$ représentant le décalage de tension dû au couplage capacitif.

Ce décalage de tension dépend bien sûr de la géométrie du transistor mais surtout de la valeur de la capacité cristal liquide $C_{LC}$. Or, cette capacité variant avec l'état du cristal liquide ("ON-OFF"), ce décalage de tension n'est pas constant pour tous les pixels, il est donc très difficile de le compenser.

La présente invention a donc pour but de proposer une nouvelle structure pour le point image qui permette de remédier aux inconvénients mentionnés ci-dessus.

En conséquence, la présente invention a pour objet un écran plat à matrice active dans lequel les points images sont disposés à l'intersection de deux réseaux de conducteurs appelés lignes et colonnes, caractérisé en ce que chaque point image est constitué par deux condensateurs en série formés par des éléments électro-optiques, l'ensemble étant monté entre deux transistors de commande, les deux transistors étant connectés respectivement à une ligne commune et à deux colonnes différentes.

Selon un premier mode de réalisation, chaque point image est relié à deux colonnes recevant respectivement une tension de données VD et une tension de données inverse -VD. Pour éviter toute tension continue sur le cristal liquide dans l'écran, les tensions VD et -VD sont alternées à chaque trame.

Selon un deuxième mode de réalisation, chaque groupe de deux points image linéairement adjacents est relié à une colonne commune recevant une tension fixe. De préférence, la tension fixe est la tension de contre-électrode.

D'autres caractéristiques et avantages de la présente invention apparaîtront à la lecture de la description des deux modes de réalisation préférentiels, cette description étant faite avec référence aux dessins ci-annexés dans lesquels :

– les figure 1A à 1C déjà décrites concernent l'art antérieur, la figure 1A étant une représentation electrique schématique d'un écran plat à matrice active, la figure 1B un schéma d'un point image élémentaire et la figure 1C un chronogramme des signaux appliqués à l'écran ;

– la figure 2 est une représentation électrique schématique d'un écran plat à matrice selon un premier mode de réalisation de la présente invention, et

– la figure 3 est une représentation électrique schématique d'un écran plat à matrice active selon un second mode de réalisation de la présente invention.

Pour simplifier la description, dans les figures les mêmes éléments portent les mêmes références.

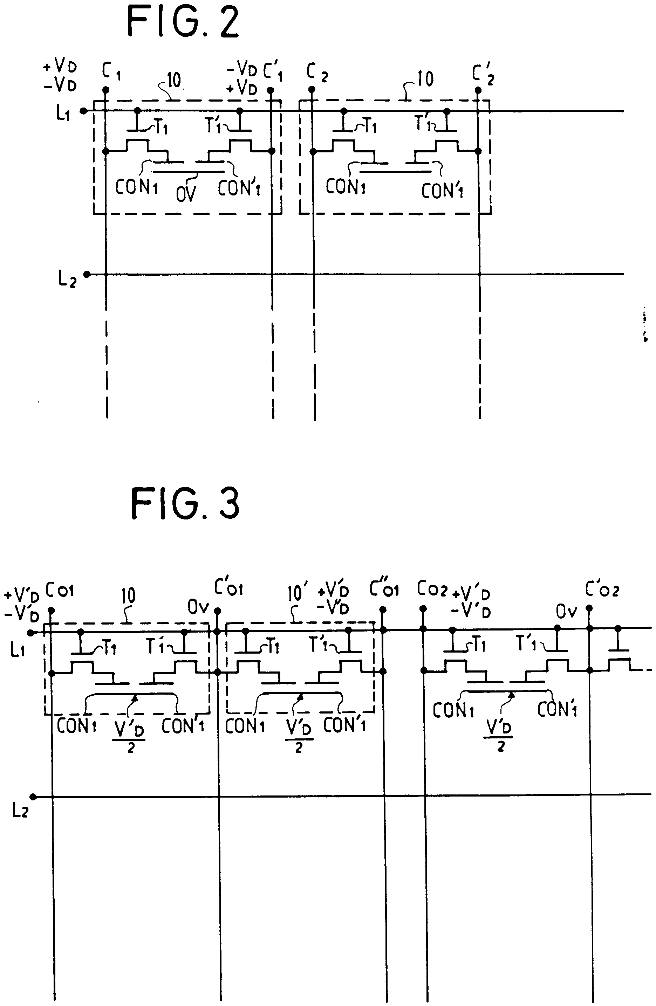

Sur la figure 2, on a représenté un premier mode de réalisation d'un écran à cristal liquide conforme à la présente invention. Dans ce cas, le point image 10 est constitué par un premier transistor T1 dont la grille est reliée à la ligne L1 du réseau de conducteurs orthogonaux et une des électrodes est connectée à une colonne C1. L'autre électrode du transistor T1 est connectée à une première armature d'un condensateur CON1 représentant l'élément électro-optique, à savoir une des électrodes déposée sur le substrat en verre enfermant le cristal liquide dans le mode de réalisation représenté. L'autre armature du condensateur CON1 qui est réalisée par une contre-électrode déposée sur le second substrat en verre enfermant le cristal liquide est connectée en série, à savoir se prolonge par la seconde armature d'un deuxième condensateur CON'1 correspondant à un second élément electro-optique. Cette seconde armature du condensateur CON'1 est connectée en série à une électrode d'un transistor T'1 dont la grille est connectée à la ligne L1 tandis que l'autre électrode est connectée à une seconde colonne C'1. Dans ce cas, chaque point image est constitué par deux condensateurs en série connectés entre deux transistors de commande qui sort eux-mêmes connectés respectivement à deux colonnes ditférentes C1 et C'1. De même, le second élément image 10 linéairement adjacent est constitué par les transistors T1 et T'1 connectés respectivement aux condensateurs CON1 et CON'1 reliés en série. Le transistor T1 est relié à la colonne C2 tandis que le transistor T'1 est relié à la colonne C'2.

En fonctionnement, les colonnes C1 et C'1 reçoivent respectivement une tension de données VD et une tension de données inverse -VD, ces deux tensions étant alternées à chaque trame. Ainsi, lorsque C1 reçoit la tension +VD, C'1 reçoit la tension -VD. D'autre part, la deuxème armature des condensateurs CON1 et CON'1 constituée par la contre-électrode est maintenue flottante. En conséquence, lorsque l'on ferme les transistors T1 et T'1 en appliquant une tension inférieure à la tension de seuil des transistors sur la ligne L1, deux décalages de tension dûs aux couplages capacitifs sur les armatures CON1 et CON'1 se produisent, mais se compensent et aucune composante continue de tension n'apparaît sur le cristal liquide.

On décrira maintenant, avec référence à la figure 3, un autre mode de réalisation d'un écran plat à matrice active conforme à la présente invention. Dans ce cas, chaque point image 10 est toujours constitué par deux condensateurs CON1 et CON'1 en série l'un avec l'autre, le condensateur CON1 étant connecté à une colonne par l'intermédiaire d'un transistor T1 et le condensateur CON'1 étant connecté à une autre colonne par l'intermédiaire du condensateur T'1. Toutefois, dans ce cas, pour deux points images 10 et 10' linéairement adjacent, on utilise une colonne commune C'01. Ceci permet de diminuer le nombre de colonnes à réaliser. De manière plus spécifique et comme représenté sur la figure 3, le transistor T1 du point image 10 est connecté à la colonne C1 tandis que le transistor T'1 du point image 10 est connecté à la colonne C'01. D'autre part, le transistor T1 du point image 10' est connecté à la colonne C'01 tandis que le transistor T'1 du point image 10' est connecté à la colonne C"01.

En fonctionnement, la colonne C'01 est portée à une tension continue fixe, de préférence la tension de contre-électrode, à savoir 0V dans le mode de réalisation représenté. Sur les colonnes C01 et C"01, on applique respectivement les tensions de données V'D ou -V'D avec inversion à chaque trame. Dans ce cas aussi, la deuxième armature des condensateurs CON1 et CON'1 est maintenue flottante et lorsqu'on ferme les transistors, elle se positionne sensiblement à une tension moyenne entre CON1 et CON'1. Toutefois, dans ce ras, pour obtenir un fonctionnement correct du dispositif, il est nécessaire d'appliquer sur les colonnes C01 et C"01 une tension V'D qui est deux fois plus élevée que la tension du cristal liquide.

Comme il est évident pour l'homme de l'art, les écrans plats conformes à la présente invention peuvent être réalisés en utilisant la technologie habituelle pour les écrans plats à matrice active. La technologie sera donc une technologie couche mince. Bien entendu, toute technologie équivalente peut aussi être utilisée.

## Revendications

1. Ecran plat à matrice active dans lequel les points image (10, 10') sont disposés à l'intersection de deux réseaux de conducteurs appelés lignes (L1 à LN) et colonnes (C1 à CM), caractérisé en ce que chaque point image est constitué par deux condensateurs (CON1, CON'1) en série formés par des éléments électro-optiques, l'ensemble étant monté entre deux transistors de commande (T1, T'1), les deux transistors étant connectés respectivement à une ligne commune (L1) et à deux colonnes différentes (C1, C'1 ou CO1, C'O1, C"O1).

2. Ecran plat selon la revendication 1, caractérisé en ce que chaque point image (10) est relié à deux colonnes (C1, C'1)recevant respectivement une tension de données VD et une tension de données inverse -VD.

3. Ecran plat selon la revendication 2, caractérisé en ce que les tensions VD et -VD sont alternées à chaque trame.

4. Ecran plat selon la revendication 1, caractérisée en ce que chaque groupe de deux points image (10, 10′) linéairement adjacents est relié à une colonne commume (C′O1) recevant une tension continue fixe.

5. Ecran plat selon la revendication 4, caractérisé en ce que la tension continue fixe est la tension de contre-électrode.

6. Ecran plat selon l'une quelconque des revendications 1 à 5, caractérisé en ce que les éléments électro-optiques sont des cristaux liquides.

# FIG.1A

# FIG.1B

# FIG. 1C

VG
(Ligne)

ON

64μs

OFF

20 ms

VO
(Colonne)

Trame positive | Trame négative

Tension
aux bornes
du pixel

V de

# FIG. 2

# FIG. 3

Office européen
des brevets

**RAPPORT DE RECHERCHE EUROPEENNE**

Numero de la demande

EP    91 40 3085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | PATENT ABSTRACTS OF JAPAN vol. 13, no. 159 (P-858)(3507) 18 Avril 1989 & JP-A-63 318 525 ( HITACHI ) 27 Décembre 1988 | 1-3,6 | G02F1/136 |
| A | * le document en entier * | 4,5 | |
| A | US-A-4 775 861 (SAITO) * colonne 3, ligne 7 - ligne 61; figures 3-5 * | 1,4 | |

DOMAINES TECHNIQUES
RECHERCHES (Int. Cl.5 )

G02F
G09G

Le présent rapport a été établi pour toutes les revendications

| Lieu de la recherche | Date d'achèvement de la recherche | Examinateur |
|---|---|---|
| LA HAYE | 10 FEVRIER 1992 | WONGEL H. |